# EUROPÄISCHE PATENTANMELDUNG

(11) **EP 1 337 021 A2**
(43) Veröffentlichungstag der Anmeldung: **20.08.2003**
(21) Anmeldenummer: 03003090.2
(22) Anmeldetag: 13.02.2003
(51) Int. Cl.: H02G 3/08

(54) **Verteiler für die informationstechnische und/oder energietechnische Verkabelung von Gebäuden**

(30) Priorität: 15.02.2002 DE 20202547 U
(71) Anmelder: Albert Ackermann GmbH & Co. KG, 51643 Gummersbach (DE)
(72) Erfinder: Herzig, Markus, 51643 Gummersbach (DE)
(74) Vertreter: Patentanwälte Ruff, Wilhelm, Beier, Dauster & Partner

(57) **Zusammenfassung**

Die Erfindung betrifft einen Verteiler für die informationstechnische und/oder energietechnische Verkabelung von Gebäuden mit einem Gehäuse (24) zum Einführen von Anschlusskabeln und zum Anordnen von Kabelverbindern. Eine Steckseite der Kabelverbinder ist von einer Außenseite des Gehäuses (24) her zugänglich angeordnet und eine Profilschiene (26) ist zum Einschieben des Gehäuses (24) vorgesehen.

## Beschreibung

Die Erfindung betrifft einen Verteiler für die informationstechnische und/oder energietechnische Verkabelung von Gebäuden mit einem Gehäuse zum Einführen von Anschlusskabeln und zum Anordnen von Kabelverbindern.

Aus der amerikanischen Patentschrift 6,060,660 ist ein Verteiler oder sogenannter Consolidation Point für die Telekommunikationsverkabelung von Gebäuden bekannt. Der dort gezeigte Verteiler weist ein Gehäuse zum Einführen von Anschlusskabeln und zum Anordnen von Kabelverbindern auf. Die Kabelverbinder werden innerhalb des Gehäuses angeordnet. Eine Änderung der Verkabelung erfordert infolgedessen das Öffnen des Verteilergehäuses und die Neueinrichtung der im Gehäuse vorgesehenen Kabelverbinder.

In dem DIN-Normentwurf EN 50173 ist unter Punkt 4.7.6 die Einrichtung von Sammelpunkten in der horizontalen Verkabelung zwischen einem Etagenverteiler und dem informationstechnischen Anschluss beschrieben. Die Zwischenschaltung eines solchen Sammelpunktes oder Consolidation Point kann nützlich sein, wo eine flexible Verlegung informationstechnischer Anschlüsse am Arbeitsplatz gefordert ist. Beispielsweise ist für jedes Großraumbüro auf einer Etage ein solcher Sammelpunkt vorgesehen. Bei einer Verlegung der Arbeitsplätze innerhalb des Großraumbüros oder Veränderung der Anzahl der Arbeitsplätze müssen dann lediglich durch die Verkabelungen von jedem Arbeitsplatz zum Sammelpunkt abgeändert werden, die übrige Verkabelung der Gebäudeetage kann jedoch unverändert bleiben.

Mit der Erfindung soll ein leicht zu montierender und flexibel einsetzbarer Verteiler geschaffen werden.

Erfindungsgemäß ist hierzu ein Verteiler für die informationstechnische und/oder energietechnische Verkabelung von Gebäuden mit einem Gehäuse zum Einführen von Anschlusskabeln und zum Anordnen von Kabelverbindern vorgesehen, bei dem eine Steckseite der Kabelverbinder von einer Außenseite des Gehäuses her zugänglich angeordnet und eine Profilschiene zum Einschieben des Gehäuses vorgesehen ist.

Ein solcher Verteiler ist leicht montierbar, da das Gehäuse zum Anschließen der Anschlusskabel und Kabelverbinder aus der an einem Gebäudeteil befestigbaren Profilschiene entnommen werden kann. Es ist somit nicht erforderlich, die Anschlusskabel und die Kabelverbinder in der endgültigen Einbaulage des Gehäuses zu verbinden, was einerseits die anfängliche Montage und andererseits auch einen nachträglichen Umbau des Verteilers erleichtert. Indem das Gehäuse in die Profilschiene einschiebbar ist, können Gehäuse mit unterschiedlichen Steckgesichtern, beispielsweise Starkstrom oder Nachrichtentechnik oder gemischte Anordnungen, gegeneinander ausgetauscht werden, wenn eine Neubelegung eines Gebäudes eine Änderung der Verkabelung erfordert. Besonders vorteilhaft kann der erfindungsgemäße Verteiler als sogenannter Sammelpunkt oder Consolidation Point zwischen einem Etagenverteiler und den Geräteanschlüssen an Arbeitsplätzen eingesetzt werden.

In Weiterbildung der Erfindung ist die Profilschiene in Längsrichtung gesehen an beiden Enden geöffnet und das Gehäuse ist in zwei einander entgegengesetzten Einschubrichtungen in die Profilschiene einschiebbar.

Durch diese Maßnahmen ist eine flexible und einfache Montage ermöglicht. Speziell nach dem Anschließen von Kabeln an die Kabelverbinder im Gehäuse ist die Montage angesichts der oft sperrigen Kabelbündel erheblich erleichtert, wenn das Gehäuse wahlweise in zwei verschiedenen Richtungen in die Profilschiene eingeschoben werden kann.

In Weiterbildung der Erfindung weist die Profilschiene senkrecht zu ihrer Längsrichtung einen U-förmigen Querschnitt auf, wobei die Schenkel des U-förmigen Querschnitts an ihren freien Enden um die Längsrichtung in Richtung auf den jeweils gegenüberliegenden Schenkel zu abgewinkelt sind, um einer Grundplatte der Profilschiene gegenüberliegende Führungsleisten zu bilden.

Auf diese Weise wird ein einfacher Aufbau der Profilschiene bei zuverlässigem Halt des Gehäuses in der Profilschiene erreicht. Die Ausbildung der Profilschiene als Blechbiegeteil ist möglich.

In Weiterbildung der Erfindung weisen die Profilschiene und/oder das Gehäuse Rastelemente zum Definieren einer Endstellung des Gehäuses in der Profilschiene auf.

Vorzugsweise rastet das Gehäuse in seiner Endstellung in der Profilschiene selbsttätig ein, so dass die Montage und der Umbau des Verteilers erleichtert sind.

In Weiterbildung der Erfindung ist an jedem Ende der Profilschiene wenigstens eine Rastnase vorgesehen, die jeweils eine in Richtung auf das gegenüberliegende Ende der Profilschiene ansteigende Rampe mit einem dem gegenüberliegenden Ende der Profilschiene zugewandten Absatz aufweisen.

Durch diese Maßnahmen wird ein zuverlässiger Halt des Gehäuses in den zwei Einschubrichtungen erreicht. Durch Vorsehen der ansteigenden Rampen mit zugehörigem Absatz rastet das Gehäuse beim Einschieben in die Profilschienen selbsttätig ein.

In Weiterbildung der Erfindung ist die Profilschiene als Blechbiegeteil ausgebildet und jede Rastnase ist auf einer federnden Blechlasche angeordnet, wobei wenigstens eine der Blechlaschen mittels eines U-förmig verlaufenden Einschnitts in einer Grundplatte der Profilschiene ausgebildet ist.

Die Ausbildung der Profilschiene als Blechbiegeteil in Verbindung mit den auf Blechlaschen angeordneten Rastnasen ermöglicht bei einfachem Aufbau eine federnde Anordnung der Rastnasen.

In Weiterbildung der Erfindung weist die Profilschiene an wenigstens einem Ende in ihrer Grundplatte Ausnehmungen zum Befestigen von Kabelbindern auf.

Auf diese Weise ist mit geringem baulichen Aufwand eine zuverlässige Zugsicherung von Kabeln möglich, die schnell montier- und lösbar ist.

In Weiterbildung der Erfindung weist die Profilschiene Mittel zum Befestigen und/oder Ausrichten weiterer Profilschienen an senkrecht zu ihrer Längsrichtung gelegenen Seiten auf.

Indem mehrere Profilschienen aneinander befestigt werden können, ist der Verteiler im Sinne eines modularen Konzepts beliebig erweiterbar. Der einen Sammelpunkt oder Consolidation Point bildende Verteiler kann mit steigenden Anforderungen an die Verkabelung wachsen ohne einen vollständigen Neuaufbau zu erfordern. Beispielsweise können in der Grundplatte sowie den Schenkeln der U-förmigen Profilschiene fluchtende Bohrungen zum Anordnen von Schraubverbindungen vorgesehen sein.

In Weiterbildung der Erfindung sind mehrere Profilschienen senkrecht zu ihrer Längsrichtung in vertikaler und/oder horizontaler Richtung zu einem Einschubrahmen für mehrere Gehäuse kombiniert.

Eine Erweiterung kann horizontal oder vertikal im Sinne des modularen Konzepts erfolgen, wodurch der Verteiler an räumliche Gegebenheiten anpassbar ist. Beispielsweise kann bei einer Unterflurmontage ein horizontal weit ausgedehnter Einschubrahmen ausgebildet werden, wohingegen bei anderen räumlichen Gegebenheiten ein Einschubrahmen mit großer vertikaler Erstreckung aufgebaut wird.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine perspektivische auseinandergezogene Darstellung eines Verteilers gemäß einer ersten Ausführungsform der Erfindung,
- Fig. 2: eine schematische perspektivische Ansicht des Verteilers der Fig. 1 und
- Fig. 3: eine schematische perspektivische Ansicht eines Verteilers gemäß einer zweiten bevorzugten Ausführungsform der Erfindung.

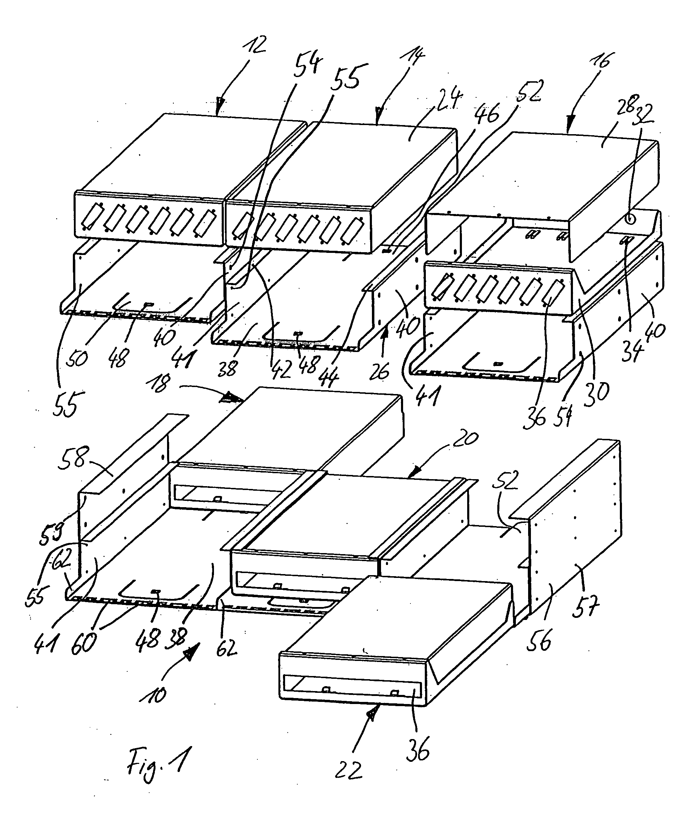

In der perspektivischen Ansicht der Fig. 1 ist ein Verteiler 10 auseinandergezogen dargestellt. Der Verteiler 10 ist als sogenannter Sammelpunkt oder Consolidation Point in einer informationstechnischen und energietechnischen Verkabelung eines Gebäudes zwischen einem Stockwerkverteiler und den Endgeräteanschlüssen an Arbeitsplätzen vorgesehen. Der Verteiler 10 kann beispielsweise für ein Großraumbüro vorgesehen sein. Der Verteiler 10 ist modular aufgebaut und besteht aus insgesamt sechs Modulen 12, 14, 16, 18, 20, 22, wobei jeweils zwei Module übereinander und drei Module nebeneinander angeordnet sind, so dass sich ein insgesamt flacher und breiter Verteiler 10 ergibt.

Jedes Modul 12, 14, 16, 18, 20, 22 besteht aus einem Gehäuse 24 und einer Profilschiene 26, in die das Gehäuse 24 eingeschoben werden kann. Jedes Gehäuse 24 besteht aus einem Deckel 28 und einem Unterteil 30. Das Unterteil 30 weist die Form einer offenen Schale auf, wobei an einer Rückseite des Unterteils 30 kreisförmige Öffnungen 32 für das Einführen von Anschlusskabeln vorgesehen sind. Unmittelbar hinter den Öffnungen 32 sind Befestigungsstege 34 für Kabelbinder vorgesehen, um die Anschlusskabel zu befestigen. In einer, der Rückseite gegenüberliegenden Vorderseite des Unterteils 30, sind eine oder mehrere Öffnungen 36 angeordnet, um Steckverbinder an dem Unterteil 30 anzuordnen. In den Öffnungen 36 angeordnete Steckverbinder werden mit den durch die Öffnungen 32 geführten Anschlusskabeln verbunden. Beispielsweise können die Steckverbinder auch auf Platinen angeordnet sein, die in geeigneter Weise an dem Unterteil 36 befestigt werden. Die Steckgesichter der Verbinder im Unterteil 30 sind von der Außenseite des Gehäuses 24 über die Öffnungen 36 zugänglich. Von den in den Öffnungen 36 angeordneten Steckverbindern gehen Anschlusskabel zu den einzelnen Arbeitsplätzen aus. Bei einer Verlegung eines Arbeitsplatzes können somit die Anschlusskabel vom Verteiler 10 zum Arbeitsplatz am Verteiler 10 ausgesteckt werden und durch geeignete, verlängerte oder verkürzte Anschlusskabel ersetzt werden.

Der Verteiler 10 fasst dabei sowohl informationstechnische als auch energietechnische Verkabelungen zusammen. Je nach Art der Verkabelung weisen an der Vorderseite der Unterteile 30 der Gehäuse 24 angeordnete Verbinder unterschiedliche Steckgesichter für unterschiedliche Verbinder auf. Entsprechend sind die Gehäuse 24 mit unterschiedlichen Öffnungen 36 versehen.

Jede Profilschiene 26 weist in ihrer Längsrichtung einen U-förmigen Querschnitt auf und besteht jeweils aus einer Grundplatte 38, zwei von der Grundplatte ausgehenden Schenkeln 40, 41 sowie zwei Führungsleisten 42 bzw. 44, die parallel zur Grundplatte 38 verlaufen und einander zugewandt sind. Die Führungsleiste 42 ist an einem der Grundplatte 38 abgewandten Ende des in der Fig. 1 linken Schenkels 41 angeordnet und rechtwinklig zum Schenkel 41 auf die gegenüberliegende Führungsleiste 44 zu abgewinkelt. In gleicher Weise ist die Führungsleiste 44 senkrecht zu dem in der Fig. 1 rechten Schenkel 40 abgewinkelt und der gegenüberliegenden Führungsleiste 42 zugewandt.

Jedes Gehäuse 24 ist in eine beliebige Profilschiene 26 einschiebbar und wird in dieser seitlich durch die Schenkel 40, 41 und in vertikaler Richtung durch die Grundplatte 38 sowie die Führungsleisten 42, 44 geführt. In Längsrichtung der Profilschiene 26 ist das Gehäuse 24 in diese einschiebbar, wobei das Gehäuse 24 parallel zur Längsrichtung in zwei entgegengesetzten Richtungen in die Profilschiene 26 eingeschoben werden kann.

Zur Festlegung des Gehäuses 24 in der Profilschiene 26 ist die Grundplatte 38 jeder Profilschiene mit zwei einander gegenüberliegenden Rastnasen 46 und 48 versehen. Die Rastnasen 48 weisen die Form einer Rampe auf, die in Richtung auf die gegenüberliegende Rastnase 46 ansteigt und einen, der gegenüberliegenden Rastnase 46 zugewandten Absatz ausbildet. Die gegenüberliegende Rastnase 46 ist in gleicher Weise ausgebildet, so dass die Absätze der Rastnasen 46 und 48 einander zugewandt sind. Jede Rastnase 46, 48 ist auf einer federnden Blechlasche angeordnet, wobei die in der Fig. 1 vorderen Blechlaschen 50 jeweils durch einen U-förmig verlaufenden Einschnitt in der Grundplatte 38 der Profilschiene 26 gebildet sind. Die in der Darstellung der Fig. 1 jeweils hinten liegende Rastnase 46 ist ebenfalls auf einer federnden Blechlasche 52 angeordnet, die allerdings abschnittsweise die hintere Begrenzung der Grundplatte 38 bildet und durch zwei parallel zueinander verlaufende Einschnitte in die Grundplatte 38 gebildet ist.

Beim Einschieben eines Gehäuses 24 in eine Profilschiene 26 wird somit, je nach Einschubrichtung, zunächst die Rastnase 48 auf der Blechlasche 50 oder die Rastnase 46 auf der Blechlasche 52 heruntergedrückt, indem eine Hinter- bzw. Vorderkante des Gehäuses 24 auf die Rampe der Rastnase 48 oder 46 aufläuft. Das Gehäuse 24 kann dann in die Profilschiene eingeschoben werden, bis eine Hinter- oder Vorderkante an der in Einschubrichtung jeweils gegenüberliegenden Rastnase 46 oder 48 anstößt. Das Gehäuse 24 schlägt mit seiner Hinter- oder Vorderkante dann gegen den Absatz der Rastnase 46 oder 48 an. Der Abstand zwischen den Absätzen der Rastnasen 46 und 48 ist dabei so bemessen, dass er im wesentlichen der Länge des Gehäuses 24 entspricht. Wenn eine Hinter- oder Vorderkante des Gehäuses 24 somit an einem Absatz der Rastnase 46 oder 48 anschlägt, schnappt die jeweils gegenüberliegende Rastnase 48 oder 46 durch die Federwirkung der Blechlasche 50 oder 52 nach oben, so dass das Gehäuse 24 zwischen den einander zugewandten Absätzen der Rastnasen 46 und 48 in einer definierten Endstellung sicher gehalten ist.

Soll ein Gehäuse 24 aus einer Profilschiene 26 herausgezogen werden, muss eine der Blechlaschen 50 oder 52 heruntergedrückt werden, so dass eine Hinter- oder Vorderkante des Gehäuses 24 über die Rastnase 46 oder 48 gleiten kann.

Jede Profilschiene 26 kann somit auf einfache Weise mit einem Gehäuse 24 bestückt werden. Je nach den Erfordernissen können dabei Gehäuse 24 mit unterschiedlichen Steckgesichtern und somit für unterschiedliche Verkabelung eingesetzt werden, beispielsweise Gehäuse 24 für nachrichtentechnische Verkabelung und Verbinder, Gehäuse 24 für energietechnische Verkabelung und Verbinder oder innerhalb eines Gehäuses 24 gemischte Anordnungen aus nachrichtentechnischen und energietechnischen Verkabelungen.

Zur Befestigung der einzelnen Module 12, 14, 16, 18, 20, 22 aneinander ist jede Profilschiene 26 mit Durchgangsbohrungen 54 in einem der Schenkel 40 und mit ausgeprägten Zentrierbuckeln 55 in dem gegenüberliegenden Schenkel 41 versehen. Die Durchgangsbohrungen 54 fluchten dabei bei zueinander ausgerichteter Anordnung zweier nebeneinander angeordneter Profilschienen 26 mit den Zentrierbuckeln 55, so dass zwei Profilschienen 26, die mit jeweils einem Schenkel 40, 41 aneinander anliegen, miteinander verbunden werden können. Die Profilschienen 26 können beispielsweise verschweißt oder verschraubt werden. Durch die in die Durchgangsbohrungen 54 einrastenden Zentrierbuckel 55 nehmen benachbarte Profilschienen 26 dabei immer eine definierte, ausgerichtete Lage ein. Dadurch ist eine prinzipiell unbeschränkte Anzahl von Modulen 12, 14, 16, 18, 20, 22 in horizontaler Richtung miteinander kombinierbar.

In vertikaler Richtung werden zur Kombination der Module 12, 14, 16, 18, 20, 22 seitliche Befestigungswinkel 56, 58 verwendet. Der Befestigungswinkel 56 weist zu den Durchgangsbohrungen 54 in den Schenkeln 40 der Profilschienen 26 fluchtende Zentrierbuckel 57 auf und kann dadurch zu den Schenkeln 40 ausgerichtet und mit diesen verbunden werden. Der Befestigungswinkel 58 weist zu den Zentrierbuckeln 55 in den Schenkeln 41 fluchtende Durchgangsbohrungen 59 auf und kann dadurch zu den Schenkeln 41 ausgerichtet und mit diesen verbunden werden. Mittels der Befestigungswinkel 56, 58 können in vertikaler Richtung zwei Module aneinander befestigt werden. Prinzipiell ist die Anzahl der in horizontaler und vertikaler Richtung angeordneten Module unbeschränkt, lediglich die Abmessungen der Befestigungswinkel müssen dann geändert werden.

Im Bereich einer Vorderkante der Grundplatte 38 jeder Profilschiene 26 sind Ausnehmungen 60 vorgesehen, die zur Befestigung von Kabelbindern dienen. Dadurch wird durch einfache Aussparungen in der Grundplatte 38 eine Befestigungsmöglichkeit für Anschlusskabel vorgesehen, die an Verbinder angeschlossen sind, die in die innerhalb eines Gehäuses 24 angeordneten und über die Öffnungen 36 zugänglichen Verbinder eingesteckt sind. Die Ausnehmungen 60 sind dabei im Bereich der Vorderkante eines balkonartigen Vorsprungs angeordnet, der dadurch gebildet ist, dass die Grundplatte in Längsrichtung über die vordere Rastnase 48 hinaus verlängert ist und auch die Schenkel 40 durch einen Bereich 62 mit reduzierter Höhe bis zu dieser Vorderkante fortgeführt sind. Durch die Bereiche 62 wird der Bereich der Vorderkante der Grundplatte 38, in dem die Ausnehmungen 60 angeordnet sind, stabilisiert.

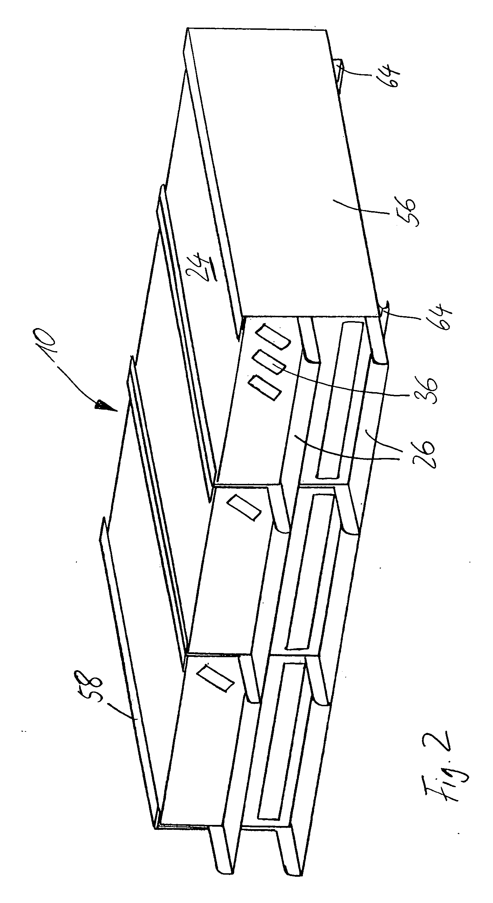

Die schematische, perspektivische Ansicht der Fig. 2 zeigt den Verteiler 10 der Fig. 1 im zusammengebauten Zustand. Gut zu erkennen sind die balkonartigen Vorsprünge der Profilschienen 26, die sich über die in den Profilschienen 26 angeordneten Gehäuse 24 hinaus erstrecken. Im Unterschied zur Fig. 1 sind die Öffnungen 36 in den Vorderseiten der Gehäuse 24 lediglich teilweise angedeutet. In der Fig. 2 ebenfalls gut zu erkennen, sind die Befestigungswinkel 56 und 58, die seitlich mit den jeweils außenliegenden Schenkeln der Profilschienen 26 verbunden werden. Der gesamte Verteiler 10 ruht auf Befestigungsschienen 64, die mit einem Gebäudeteil verschraubt werden können und speziell bei Bodenmontage einen gewissen Abstand des Verteilers 10 von einer Bodenoberfläche sicherstellen. Insgesamt sechs Profilschienen 26 sind bei dem Verteiler 10 zu einem Einschubrahmen für sechs Gehäuse 24 kombiniert.

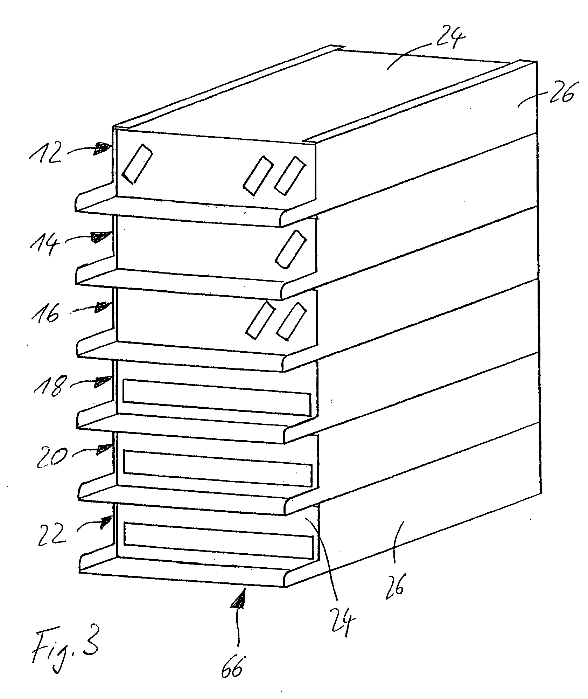

Eine weitere bevorzugte Ausführungsform der Erfindung zeigt die perspektivische schematische Ansicht der Fig. 3. Hier sind die in der Fig. 1 und 2 dargestellten sechs Module 12, 14, 16, 18, 20, 22 zu einem vertikalen Stapel kombiniert. Seitliche Befestigungswinkel, um die einzelnen Module 12, 14, 16, 18, 20, 22 miteinander zu verbinden, sind nicht dargestellt. Durch die in der Fig. 3 dargestellte Anordnung wird ein Verteiler 66 geschaffen, der eine nur geringe Grundfläche erfordert und damit beispielsweise für die Anordnung in Verteilerräumen geeignet ist. Wie bei der im Zusammenhang mit Fig. 1 und Fig. 2 erläuterten Ausführungsform können die Gehäuse 24 der einzelnen Module 12, 14, 16, 18, 20, 22 aus den Profilschienen 26 herausgeschoben bzw. in diese wieder eingeschoben werden und sind untereinander austauschbar und sechs Profilschienen 24 bilden einen Einschubrahmen für sechs Gehäuse 26.

## Patentansprüche

1. Verteiler für die informationstechnische und/oder energietechnische Verkabelung von Gebäuden mit einem Gehäuse (24) zum Einführen von Anschlusskabeln und zum Anordnen von Kabelverbindern, **dadurch gekennzeichnet, dass** eine Steckseite der Kabelverbinder von einer Außenseite des Gehäuses (24) her zugänglich angeordnet und eine Profilschiene (26) zum Einschieben des Gehäuses (24) vorgesehen ist.

2. Verteiler nach Anspruch 1, **dadurch gekennzeichnet, dass** die Profilschiene (26) in Längsrichtung gesehen an beiden Enden geöffnet und das Gehäuse (24) in zwei einander entgegengesetzten Einschubrichtungen in die Profilschiene (26) einschiebbar ist.

3. Verteiler nach Anspruch 1 oder 2, **dadurch gekennzeichnet, dass** die Profilschiene (26) senkrecht zu ihrer Längsrichtung einen u-förmigen Querschnitt aufweist, wobei die Schenkel (40, 41) des u-förmigen Querschnitts an ihren freien Enden um die Längsrichtung in Richtung auf den jeweils gegenüberliegenden Schenkel (24) zu abgewinkelt sind, um einer Grundplatte (38) der Profilschiene (26) gegenüberliegende Führungsleisten (42, 44) zu bilden.

4. Verteiler nach einem der vorstehenden Ansprüche, **dadurch gekennzeichnet, dass** die Profilschiene (26) und/oder das Gehäuse Rastelemente (46, 48) zum Definieren einer Endstellung des Gehäuses (24) in der Profilschiene (26) aufweisen.

5. Verteiler nach Anspruch 4, **dadurch gekennzeichnet, dass** an jedem Ende der Profilschiene (26) wenigstens eine Rastnase (46, 48) vorgesehen ist, die jeweils eine in Richtung auf das gegenüberliegende Ende der Profilschiene (26) ansteigende Rampe mit einem dem gegenüberliegenden Ende der Profilschiene (26) zugewandten Absatz aufweisen.

6. Verteiler nach Anspruch 5, **dadurch gekennzeichnet, dass** die Profilschiene (26) als Blechteil ausgebildet ist und jede Rastnase (46, 48) auf einer federnden Blechlasche (50, 52) angeordnet ist, wobei wenigstens eine der Blechlaschen (50) mittels eines u-förmig verlaufenden Einschnitts in einer Grundplatte (38) der Profilschiene (26) ausgebildet ist.

7. Verteiler nach einem der vorstehenden Ansprüche, **dadurch gekennzeichnet, dass** die Profilschiene (26) an wenigstens einem Ende in ihrer Grundplatte (38) Ausnehmungen (60) zum Befestigen von Kabelbindern aufweist.

8. Verteiler nach einem der vorstehenden Ansprüche, **dadurch gekennzeichnet, dass** die Profilschiene (26) Mittel (54, 55) zum Befestigen und/oder Ausrichten weiterer Profilschienen (26) an senkrecht zu ihrer Längsrichtung gelegenen Seiten aufweist.

9. Verteiler nach Anspruch 8, **dadurch gekennzeichnet, dass** mehrere Profilschienen (26) senkrecht zu ihrer Längsrichtung in vertikaler und/oder horizontaler Richtung zu einem Einschubrahmen für mehrere Gehäuse (24) kombiniert sind.
